# EUROPÄISCHE PATENTSCHRIFT

(11) **EP 4 518 666 B1**
(45) Veröffentlichungstag und Bekanntmachung des Hinweises auf die Patenterteilung: **01.07.2026**
(21) Anmeldenummer: 23726282.9
(22) Anmeldetag: 04.05.2023
(51) Int. Cl.: A22C 11/12, B65B 9/10, B65B 39/06, B65B 51/08

(54) **VERFAHREN UND VORRICHTUNG ZUM HERSTELLEN VON EINEM EIN LEBENSMITTEL IN EINER HAUT BEINHALTENDEM PRODUKT**
METHOD AND DEVICE FOR THE PRODUCTION OF A PRODUCT CONTAINING A FOODSTUFF IN A CASING
PROCEDE ET DISPOSITIF POUR LA FABRICATION D'UN PRODUIT CONTENANT UN ALIMENT DANS UNE PEAU

(30) Priorität: 04.05.2022 DE 102022110969
(43) Veröffentlichungstag der Anmeldung: 12.03.2025
(73) Patentinhaber: PEME SA, 6572 Quartino (CH)
(72) Erfinder: PEDROIA, Stefano, 6648 Minusio (CH)
(74) Vertreter: Patentanwälte und Rechtsanwalt Weiß, Arat & Partner mbB
(86) Internationale Anmeldenummer: PCT/EP2023/061756
(87) Internationale Veröffentlichungsnummer: WO 2023/213924

(56) Entgegenhaltungen:
- EP-A1- 3 545 768
- EP-B1- 0 865 732
- EP-B1- 3 497 157
- WO-A1-2018/234520
- WO-A1-87/07240
- SU-A1- 435 803

## Beschreibung

### Technisches Gebiet

Die Erfindung betrifft Verfahren zum Herstellen von Lebensmittel in einer Haut beinhaltenden Produkten an einem Strang gemäß dem Oberbegriff von Anspruch 1, sowie eine Vorrichtung hierfür.

### Stand der Technik

Die vorliegende Erfindung bezieht sich auf die Herstellung von Lebensmittelprodukten allgemein. Hierbei stehen vor allem flüssige Lebensmittelprodukte, wie Suppen, im Vordergrund. Bislang werden diese zum Beispiel in Beutel abgepackt und zur Aufbereitung in die Mikrowelle gegeben. Dabei erfordert das Abpacken dieser Lebensmittel einen erheblichen Zeitaufwand.

Herstellungsverfahren, die bislang zur Abfüllung von Würsten an einem Strang verwendet wurden, können nicht ohne weiteres allgemein auf Lebensmittel angewendet werden, da bei den meisten bekannten Verfahren zwischen den einzelnen Würsten ein Bereich erzeugt wird, der durch einen metallischen Clip gesichert wird. Damit könnten diese Produkte bislang aber nicht in der Mikrowelle wiedererwärmt werden.

Abbindemaschinen der vorliegenden Art für Würste sind in vielfältiger Form und Ausführung bekannt und auf dem Markt. Insbesondere wird auf die EP 0 865 732 B1 verwiesen. Bei der dort beschriebenen Abbindemaschine werden Würstchen mit einem konstanten Abstand abgebunden. Dabei wird mit einer sogenannten Doppel-Abbindung gearbeitet. Bei der Doppel-Abbindung arbeiten meistens zwei Paare von Verdränger-Zangen zusammen. Das erste Paar ist feststehend ausgebildet, während sich das zweite Paar auf einem Wagen befindet, sodass es entlang dem Abbindebereich beweglich ist. Dieser Wagen wird mittels eines Betätigungskolbens verschoben. Der Abbindebereich wird durch zwei Abbindestellen gebildet, wobei nach Erzeugung der ersten Abbindestelle ein Rotor zum Zuführen des Abbindefadens gestoppt werden muss, bis die Wurst in Förderrichtung weiter bewegt wurde und er dann die zweite Abbindestelle erzeugt. Ähnliches zeigt auch die SU 435803 A1.

Bei der EP 1 053 683 A2 wird das komplette Rotorgehäuse bewegt und so ein Abstand zwischen zwei Würsten gebildet. Die Axialbewegung findet ebenfalls durch einen Pneumatikzylinder statt. Bei der Axialbewegung von Rotorgehäuse ist der Rotor wiederum in seiner Drehbewegung gestoppt.

Durch dieses ständige Stoppen und Beschleunigen des Rotors wird ein hoher Verschleiss insbesondere bei den Antriebsriemen erzeugt, was die Produktionssicherheit beeinträchtigt und die laufenden Kosten erhöht.

Ein weiteres Problem besteht darin, dass zwischen der ersten und der zweiten Abbindestelle im Abbindebereich Produktreste verbleiben, die nach einem Abschneiden der Würste erhebliche hygienische Probleme mit sich bringen.

Aus der EP 3 545 768 A1 ist eine Vorrichtung und ein Verfahren zum Abbinden von einer in eine Haut gefüllten Masse bekannt. Dies geschieht an dafür vorgesehenen Abbindestellen mit einem Faden. Die Vorrichtung umfasst einen Rotor sowie eine mit dem Rotor in Verbindung stehende Führungseinrichtung zur Führung des Fadens, wobei der Rotor einen Aufnahmeabschnitt zur Aufnahme mehrerer Wicklungen des Fadens aufweist. Dabei geht es vor allem um die Erzeugung der Abbindestellen vor und nach einer Wurst, wobei der Rotor in unterschiedliche Drehrichtungen versetzt wird.

Aus der WO 2018/234520 A1 ist eine Vorrichtung zum Abtrennen von zumindest einer Wurst von einer anderen Wurst, insbesondere von einem Wurststrang im Bereich eines mit zwei Abbindestellen gebildeten Abbindebereichs zwischen der Wurst und dem Wurststrang beschrieben. Diesem Abbindebereich ist eine Schneideinrichtung zugeordnet. Ferner wird beschrieben, dass die Wurst von einer Schnur fest umwickelt wird, wobei die Schnur über den gesamten Wurststrang geführt, aber vor allem an den Abbindestellen nahe der Wurst besonders stark gewickelt ist, damit der in der Wurst befindliche Inhalt nicht austreten kann.

Aus der DE 601 03 357 T2 ist beispielsweise ein rohrförmiger geschlossener Behälter zur Lebensmittelverpackung bekannt, der einen Kunststofffilm umfasst, der rohr- oder wurstförmig mit sich überlappenden, miteinander schmelzverklebten Rändern ausgebildet ist. Dabei verbleibt ein nichtschmelzverklebter Abschnitt, der einen freien Rand des oberen Films an der Überlappungsstelle bildet, den man zum Aufreißen des Behälters ergreift, um dadurch Zugang zum Behälterinnern zu erlangen.

Ferner wird in der DE 1 604 580 C ein Verfahren und eine Vorrichtung zur Herstellung von allseitig geschlossenen Beutelpackungen aus thermoplastischem Kunststoff für fliessbares Material gezeigt. Dabei wird ein mit dem fliessbaren Material gefüllter Kunststoffschlauch in entsprechenden Abständen eingedrückt und die Wandung des Schlauches längs einer sich quer über den Schlauch erstreckenden Linie auf einer bestimmten Breite gegeneinander gepresst und miteinander zu einer eine Soll-Reiss-Linie aufweisenden Verbindungsstelle verschweißt.

### Aufgabe der Erfindung

Die Aufgabe der vorliegenden Erfindung ist es, die oben erwähnten Nachteile zu beseitigen und vor allem die Herstellung von Lebensmittelprodukten wesentlich zu beschleunigen und die Zubereitung dieser Lebensmittelprodukte zu vereinfachen.

### Lösung der Aufgabe

Die obengenannte Aufgabe wird durch ein Verfahren gemäß Anspruch 1, sowie durch eine Vorrichtung mit den technischen Merkmalen des Anspruchs 13 gelöst.

Abfüllmaschinen für Brät in einer Wursthaut können auch zum Abfüllen beliebiger Lebensmittel in eine andere Haut zum Herstellen dieses Lebensmittels an einem Strang verwendet werden. Vor allem ist dabei an das Abfüllen von Suppen gedacht, allerdings ist die Erfindung auf jedes andere fliessfähige Lebensmittel anwendbar.

Das Abbinden mit einem Faden, beispielsweise einem textilen Faden, hat den wesentlichen Vorteil, dass das Lebensmittel, abgebunden in der Haut, zum Beispiel in die Mikrowelle gelegt und dort erhitzt werden kann. In der Praxis hat sich herausgestellt, dass der streng abgebundene Abbindebereich zwischen zwei Produkten zu einer ausreichenden Dichtheit führt. Zum Gebrauch des Lebensmittels muss der Benutzer dann nur den Faden an dem letzten Produkt ergreifen und daran ziehen, sodass sich der Faden von selbst aufdreht und der Produktinhalt zum Beispiel in ein Gefäss gegeben werden kann.

Dieser Faden wird so um den Abbindebereich gewickelt, dass er möglichst viel Lebensmittel, welches sich zwischen den beiden Abbindestellen befinden kann, verdrängt, bevor die zweite Abbindestelle erzeugt wird. Damit wird den wesentlich gestiegenen hygienischen Anforderungen Rechnung getragen.

Gemäss der vorliegenden Erfindung wird unter Faden jedes längliche Element verstanden, welches um den Abbindebereich gewickelt werden kann, gleich aus welchem Material und in welcher Struktur. Dabei soll im Rahmen der vorliegenden Erfindung auch liegen, dass die Erzeugung der Abbindestellen getrennt von der Umwicklung des Abbindebereichs erfolgt. Dies könnte sogar durch unterschiedliche Fäden bewirkt werden, allerdings wird natürlich im Rahmen der vorliegenden Erfindung bevorzugt, dass die Abbindestellen und die Umwicklung des Abbindebereichs durch den gleichen Faden und den gleichen Rotor erfolgen.

Im Rahmen der vorliegenden Erfindung liegt jeder mögliche und denkbare Fadenzulieferer. Meist wird es sich dabei um einen aus dem Stand der Technik bekannten Rotor handeln, der den Faden um die Abbindestellen und den Abbindebereich wickelt. Dieser Fadenzulieferer wird an der ersten Abbindestelle auf maximale Geschwindigkeit beschleunigt und erzeugt die erste Abbindestelle, indem er den Faden mehrfach um den Abbindebereich wickelt. Danach wird das Produkt zur Erzeugung einer vorgegebenen Anzahl von Wicklungen entlang dem Abbindebereich in Förderrichtung weitergezogen, wobei dies mit einer Geschwindigkeit erfolgt, welche mit der Geschwindigkeit des Rotors des Fadenzulieferers synchronisiert ist, damit eine gewünschte Anzahl an Wicklungen erzielt werden kann. Dies kann dazu führen, dass der Rotor immer mit gleichbleibender hoher Geschwindigkeit dreht oder bei geringerer Vorschubgeschwindigkeit des Produkts die Drehzahl etwas verringert wird.

Bevorzugt geschieht das Ganze im Zusammenwirken mit zumindest einem, bevorzugt mit zwei Verdrängern, wobei meist ein Verdränger feststehend und ein zweiter Verdränger verschiebbar ist bzw. bei Beginn des Verfahrens die Haut und danach ein bereits fertig gestelltes Produkt mit sich zieht. Der erste, feststehende Verdränger hat vor allem die Aufgabe, das Produkt vor der ersten Abbindestelle abzuschliessen und die Produktmasse gegen das Füllrohr hin zu verdrängen Zu diesem Zweck weist der Verdränger entsprechende Zangen oder dergleichen auf.

Der zweite Verdränger umschliesst den Abbindebereich nach der ersten Abbindestelle, was ebenfalls bevorzugt durch entsprechende Zangen geschieht. Er wird dann nach Erzeugung der ersten Abbindestelle in Förderrichtung des Strangs verfahren und nimmt dabei die Haut bzw. das erzeugte Produkt mit. Hierdurch wird der Abbindebereich erzeugt, wobei bei bevorzugt nicht ganz geschlossenem ersten Verdränger schon einiges Lebensmittel aus dem Abbindebereich zurück gegen das Füllrohr hin verdrängt wird. Bei Erreichen der ersten Abbindestelle wird der Abbindebereich wieder angehalten und die erste Abbindestelle erzeugt. Nun beginnt der Vorgang von vorn.

Die Bewegung des Wagens mit dem zweiten Verdränger erfolgt bevorzugt durch einen Servoantrieb, d.h., einen Antrieb, dessen Geschwindigkeit geregelt werden kann, wie dies beispielsweise bei einem Elektromotor der Fall ist. Der Servoantrieb kann beschleunigt, verlangsamt, gestoppt und wieder beschleunigt werden. Wie die Bewegung letztendlich auf den Wagen übertragen wird, ist von untergeordneter Bedeutung, vom Erfindungsgedanken wird sowohl ein Spindeltrieb, als auch ein entsprechendes Getriebe oder ein Linearantrieb umfasst. Ein derartiger Servoantrieb ermöglicht die nachfolgend beschriebene Synchronisierung zwischen der Drehbewegung des Rotors mit dem Abbindefaden und der Bewegung der Verdränger.

Wesentlich bei der vorliegenden Erfindung ist, dass die Synchronisierung zwischen der Bewegung des Rotors mit dem Abbindefaden und der Verdrängerbewegung so ausgestaltet ist, dass gezielt eine gewünschte Fadensteigung zwischen den beiden Abbindestellen erzeugt werden kann, ohne dass der Rotor stoppt und erst dann die axiale Bewegung des zweiten Verdrängers stattfindet. Es findet auch kein Stopp zwischen der ersten und der zweiten Abbindung statt, sodass der Verschleiss reduziert und damit auch die laufenden Kosten verringert werden können. Ferner kann durch die Synchronisierung sowohl die Anzahl der Wicklungen um den Abbindebereich als auch die Stärke der Einschnürung des Abbindebereichs durch die Wicklung bestimmt werden.

Ein besonderes Augenmerk der vorliegenden Erfindung ist auch auf die Berücksichtigung von zwei wichtigen Parametern, nämlich der Hautsorte und der Produktqualität, gerichtet. Zu berücksichtigen sind vor allem unterschiedliche Festigkeitswerte und Dehnungsverhalten bei den Häuten. In einem einfachen Ausführungsbeispiel ist an eine Klarsichtfolie gedacht, jedoch sollen im Rahmen der Erfindung alle Umhüllungen liegen, die für die Aufnahme von Lebensmittel geeignet sind.

Bei Lebensmitteln sind natürlich die Konsistenz, Zusammensetzung usw. zu berücksichtigen. Gemäss der vorliegenden Erfindung sollen für diese Parameter die Geschwindigkeit der axialen Bewegung des Verdrängers und auch die Beschleunigung des Rotors ermittelt und angepasst werden.

Die vorliegende Erfindung sieht vor, dass z.B. im Bereich des Hauteinzugs am Rotorgehäuse eine Kamera installiert ist, welche Aufnahmen von der Haut macht und mit Hilfe einer künstlichen Intelligenz die Hautsorte erkennt. Die künstliche Intelligenz kann durch Bildvergleiche Objekte klar zuordnen. Auch die Produktqualität kann durch eine entsprechende künstliche Intelligenz ermittelt werden. Mit Hilfe der festgestellten Hautsorte und der Produktqualität erfolgt eine Basiseinstellung der Geschwindigkeit, Verlangsamung und Beschleunigung der Maschine für einzelne Lebensmittel und gegebenenfalls eines Zugs, der auf den Abbindefaden wirkt. Diese eingestellten Werte werden dann für jedes Lebensmittel gespeichert und können abgerufen werden.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:

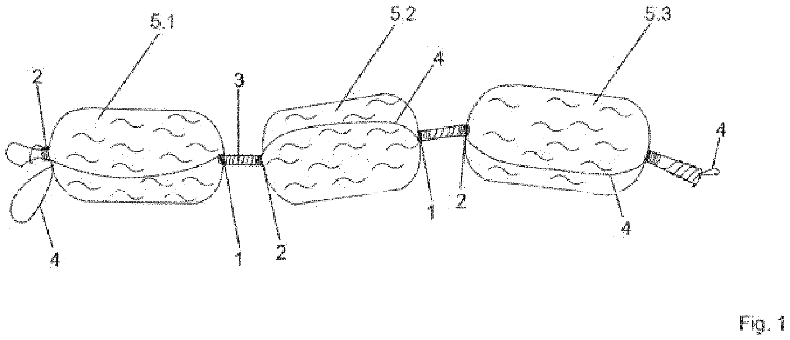

- Figur 1: eine Draufsicht auf drei Produkte in einem Produktstrang;
- Figuren 2 bis 4: schematische Darstellungen der Erzeugung eines Abbindebereichs gemäss der vorliegenden Erfindung zwischen Produkten an einem Strang in verschiedenen Verfahrensstufen.

Ein Lebensmittel für Produkte 5.1 bis 5.3 gelangt aus einem Füllrohr 7 in eine Haut 8, welche ziehharmonikaartig auf das Füllrohr 7 aufgeschoben ist. Dabei wird die Haut 8 durch Bremslippen 9 auf dem Füllrohr 7 festgehalten. Vor dem Füllrohr 7 bildet sich eine Blase 10 mit Lebensmittel in der Haut 8.

In der Regel wird nun bei der Erstellung des Abbindebereichs zusätzlich mit zwei Paaren von zangenartigen Verdrängern 11 und 12 gearbeitet. Der vordere Verdränger 11 ist feststehend, während ein hinterer, beweglicher Verdränger 12 auf einem nicht näher gezeigten Wagen montiert ist, auf welchem dieser zur Erzeugung des Abbindebereichs 3 mittels einem hydraulisch oder pneumatisch betätigten Kolben verschoben werden kann, wobei er am Anfang der Herstellung die Haut 8 und darauf folgend auch ein bereits hergestelltes Produkt mitnimmt.

Der abgeschlossene Abbindebereich 3 wird im vorliegend gezeigten Ausführungsbeispiel durch eine erste Abbindestelle 1 und durch eine zweite Abbindestelle 2 erzeugt. Dies geschieht mittels eines Fadens 4, der mittels eines nicht gezeigten Rotors um den Abbindebereich 3 gewickelt wird. Dabei erfolgt eine feste Einschnürung an den Abbindestellen 1 und 2und auch entlang dem Abbindebereich 3.

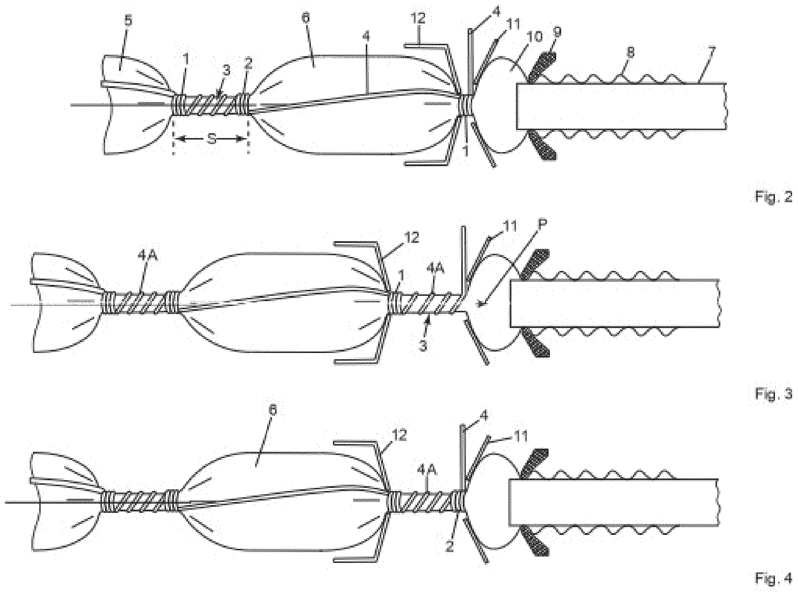

Der Verfahrensablauf ist folgender:
Entsprechend der vorliegenden Erfindung wird nun gemäss Figur 2 die Abbindestelle 1 bei maximaler Geschwindigkeit des Rotors und mit gespanntem Faden 4 erzeugt. Der Verdränger 12 entfernt sich dann gemäss Figur 3 von dem feststehenden Verdränger 11, zieht das Produkt mit und bildet den Abbindebereich 3, wobei Lebensmittel, welches sich in dem Abbindebereich 3 befindet, durch die geschlossenen Zangen des Verdrängers 11 in Richtung des Pfeils P gemäss Figur 3 in die Blase 10 verdrängt wird. Dies geschieht bevorzugt bei gleichbleibender Umwickelgeschwindigkeit des Rotors und bestehender Fadenbremse. Auf diese Weise wird der Abbindebereich definiert umwickelt, was bedeutet, dass eine vorbestimmte Anzahl von Wicklungen 4A um den Abbindebereich 3 gelegt wird.

Danach erfolgt gemäss Figur 4 die Herstellung der zweiten Abbindestelle 2 bei bevorzugt gleichbleibender Geschwindigkeit des Fadenrotors und Abbremsung des Fadens, damit die Spannung erhalten bleibt.

Nach der Erstellung der zweiten Abbindestelle 2 wird der Verdränger 11 geöffnet und das Produkt beispielsweise von dem Verdränger 12 nach links gezogen, so dass das Füllrohr 7 die Haut 8 mit Lebensmittel für das nächste Produkt füllen kann. Gleichzeitig ist die Fadenbremse geöffnet, sodass sich kein Faden um das neu gebildete Produkt legt, sondern der Faden an diesem Produkt entlang geführt wird. Bei Erreichen der gewünschten Länge des Produkts wird der Verdränger 11 wieder geschlossen, der Verdränger 12 geöffnet und in seine Ausgangslage gemäss Figur 2 zurückgefahren.

Die Bewegung des zweiten Verdrängers 12 auf seinem Wagen erfolgt durch einen hydraulischen oder pneumatischen Zylinder. Der Hub zwischen zwei Endlagen entspricht in etwa dem Abstand S. Bei dieser Bewegung nimmt der zweite Verdränger 12 den Zipfel der Wursthaut 8 nach der ersten Abbindestelle 1 bzw. die Wurst in Förderrichtung mit.

Alle Bewegungen des Rotors sowohl zur Erzeugung der Abbindestellen 1 und 2 als auch des Abbindebereichs 3 und auch gegebenenfalls die Bewegung/en des/der Verdränger 11 und 12 werden durch Servoantriebe erzeugt, wodurch sowohl Rotor als auch Verdränger exakt beschleunigt bzw. abgebremst werden können. Das bedeutet, dass erfindungsgemäss der Rotor immer mit maximaler Geschwindigkeit drehen kann und zwar bei Erzeugung der beiden Abbindestellen 1 und 2 und bei Erzeugung der Wicklungen 4 A.

Denkbar ist aber auch, dass die erste Abbindestelle 1 mit maximaler Geschwindigkeit des Rotors erzeugt wird, danach der Rotor entlang dem Abbindebereich mit einer vorbestimmten Geschwindigkeit und gegebenenfalls geringerer Drehzahl bewegt und dann erst zur Erzeugung der zweiten Abbindestelle 2 der Rotor auf maximale Geschwindigkeit erhöht wird. Die Geschwindigkeit, mit der der Rotor den Abbindefaden zur Erzeugung der Abbindestellen um den Abbindebereich wickelt, kann eine andere sein, als diejenige, mit der die Wicklungen 4A entlang dem Abbindebereich erzeugt werden. Bei Erreichen der zweiten Abbindestelle 2 braucht der Rotor auch nicht gestoppt zu werden, lediglich die Wickelgeschwindigkeit wird erhöht.

Durch ein Synchronisieren der Rotorbewegung mit Abbindefaden und der Verdrängerbewegung entlang dem Abbindebereich 3 wird so gezielt die Fadensteigung zwischen den beiden Abbindestellen 1 und 2 festgelegt, ohne dass der Rotor stoppt und erst dann die axiale Bewegung des zweiten Verdrängers entlang der Abdrehstelle erfolgt. Damit wird ein ständiges Stoppen und Beschleunigen des Rotors deutlich reduziert, was zu einem wesentlich geringeren Verschleiss und damit einhergehenden laufenden Kosten führt.

**Bezugszeichenliste**

| | | | | | |
|---|---|---|---|---|---|
| 1 | 1. Abbindestelle | 34 | | | |
| 2 | 2. Abbindestelle | 35 | | | |
| 3 | Abbindebereich | 3 | | | |
| 4 | Faden | 37 | | | |
| 5 | Produkt | 38 | | | |
| | | 39 | | | |
| 7 | Füllrohr | 40 | | | |
| 8 | Haut | 41 | | | |
| 9 | Bremslippe | 42 | | | |
| 10 | Blase | 43 | | | |
| 11 | Verdränger | 44 | | | |
| 12 | Verdränger | 45 | | | |
| 13 | | 4 | | | |
| 14 | | 47 | | | |
| 15 | | 48 | | | |
| 1 | | 49 | | | |
| 17 | | 50 | | 4A | Wicklung |
| 18 | | 51 | | | |
| 19 | | 52 | | | |
| 20 | | 53 | | | |
| 21 | | 54 | | | |
| 22 | | 55 | | | |
| 23 | | 5 | | P | Pfeil |
| 24 | | 57 | | | |
| 25 | | 58 | | S | Länge von 3 |
| 2 | | 59 | | | |
| 27 | | 0 | | | |
| 28 | | 1 | | | |
| 29 | | 2 | | | |
| 30 | | 3 | | | |
| 31 | | 4 | | | |
| 32 | | 5 | | | |
| 33 | | | | | |

## Patentansprüche

1. Verfahren zum Herstellen von ein Lebensmittel in einer Haut (10) beinhaltendem Produkt (5.1-5.3) an einem Strang, wobei aufeinanderfolgende Produkte (5.1-5.3) durch einen zwischen zwei Abbindestellen (1,2) erzeugten Abbindebereich (3) voneinander getrennt werden, wobei der Abbindebereich (3) über seine Länge (S) mehrfach von einem gespannten Faden (4) mit einer vorbestimmten Anzahl von Wicklungen so umwickelt wird, dass möglichst viel Lebensmittel, welches sich zwischen den Abbindestellen (1,2) befindet, verdrängt wird, bevor die zweite Abbindestelle erzeugt wird und dieser Faden von Produkt (5.1-5.3) zu Produkt (5.1-5.3) weitergeführt wird,
**dadurch gekennzeichnet,**
**dass** der Abbindebereich (3) durch zumindest einen Verdränger (11, 12) erzeugt wird und ein Fadenzulieferer an der ersten Abbindestelle (1) des Abbindebereichs (3) zur Erzeugung der ersten Abbindestelle (1) mehrfach den Faden (4) um den Abbindebereich (3) wickelt, danach zur Erzeugung einer vorgegebenen Anzahl von Wicklungen (4A) das Produkt (5.1-5.3) entlang seiner Fördererrichtung verfahren und die zweite Abbindestelle (2) erzeugt wird,
wobei eine Bewegung eines Rotors mit dem Faden (4) und eine Bewegung der Verdränger (11,12) synchronisiert werden, sodass eine Fadensteigung zwischen den beiden Abbindestellen (1,2) erzeugt werden kann, bevor eine axiale Bewegung des Verdrängers (12) stattfindet, und
wobei eine Hautsorte mittels einer mit einer künstlichen Intelligenz in Verbindung stehenden Kamera am Rotorgehäuse im Bereich eines Hauteinzugs bestimmt und danach die Bewegung von Fadenzulieferer und/oder Verdrängern (11, 12) bestimmt wird.

2. Verfahren nach Anspruch 1, **dadurch gekennzeichnet, dass** für die Erzeugung der Abbindestellen (1,2) und die Umwicklung des Abbindebereichs (3) der gleiche Faden (4) verwendet wird.

3. Verfahren nach Anspruch 1 oder 2, **dadurch gekennzeichnet, dass** die Geschwindigkeit sowohl bei Erzeugung der Abbindestellen (1, 2) als auch der Umwicklung des Abbindebereichs (3) gleichbleibend ist.

4. Verfahren nach einem der Ansprüche 1 bis 3, **dadurch gekennzeichnet, dass** die Umwicklungsgeschwindigkeit des Fadenzulieferers bei der Erzeugung der Abbindestellen (1, 2) eine andere ist als bei der Erzeugung der Wicklungen (4A) um den Abbindebereich (3).

5. Verfahren nach wenigstens einem der vorhergehenden Ansprüche, **dadurch gekennzeichnet, dass** die Haut (8) aus Kunststoff besteht.

6. Verfahren nach wenigstens einem der vorhergehenden Ansprüche, **dadurch gekennzeichnet, dass** eine durchsichtige Haut (8) verwendet wird.

7. Verfahren nach wenigstens einem der vorhergehenden Ansprüche, **dadurch gekennzeichnet, dass** als in die Haut (8) einzufüllendes Lebensmittel ein flüssiges Lebensmittel, insbesondere eine Suppe, gewählt wird.

8. Verfahren nach wenigstens einem der vorhergehenden Ansprüche, **dadurch gekennzeichnet, dass** in Förderrichtung vor der ersten Abbindestelle (1) ein Verdränger (11) den Abbindebereich (3) einschnürt.

9. Verfahren nach Anspruch 8, **dadurch gekennzeichnet, dass** nach der ersten Abbindestelle (1) durch einen weiteren Verdränger (12) das Produkt (5.1-5.3) in Förderrichtung zur Erzeugung des Abbindebereichs (3) weitergezogen wird.

10. Verfahren nach Anspruch 9, **dadurch gekennzeichnet, dass** beim Weiterziehen des Produkts (5.1-5.3) zwischen dem weiteren Verdränger (12) und dem ersten Verdränger (11) der Abbindebereich (3) umwickelt wird

11. Verfahren nach Anspruch 10, **dadurch gekennzeichnet, dass** vor dem ersten Verdränger (11) die zweite Abbindestelle (2) erzeugt wird.

12. Verfahren nach wenigstens einem der Ansprüche 9 bis 11, **dadurch gekennzeichnet, dass** die Bewegung des weiteren Verdrängers (12) und die Bewegung des Fadenzulieferers synchronisiert werden.

13. Vorrichtung zum Herstellen von Lebensmittel in einer Haut beinhaltenden Produkte (5.1-5.3) an einem Strang, wobei aufeinanderfolgende Produkte (5.1-5.3) durch einen Abbindebereich (3) voneinander getrennt sind und diesem ein Rotor für einen Faden (4) zum Umwickeln des Abbindebereichs (3) und ein bewegbarer Verdränger (12) zugeordnet sind, **dadurch gekennzeichnet, dass** die Bewegung des Verdrängers (12) synchronisiert mit der Bewegung des Rotors mit dem Faden (4) mittels eines Servoantriebs erfolgt, sodass eine Fadensteigung zwischen zwei Abbindestellen (1,2) erzeugbar ist, bevor die axiale Bewegung des Verdrängers (12) stattfindet, wobei zur Bestimmung einer Hautsorte eine Kamera am Rotorgehäuse im Bereich eines Hauteinzugs vorgesehen ist, die mit einer künstlichen Intelligenz in Verbindung steht und die Bewegung von Fadenzulieferer und/oder Verdrängern (11, 12) bestimmt.

14. Vorrichtung nach Anspruch 13, **dadurch gekennzeichnet, dass** der Servoantrieb ein Elektromotor oder Linearantrieb ist.

## Claims

1. A method for manufacturing a product (5.1-5.3) comprising a foodstuff enclosed in a casing (10) on a strand, wherein successive products (5.1-5.3) are separated from one another by a tying zone (3) formed between two tying points (1, 2), wherein the tying zone (3) is wrapped several times along its length (S) by a tensioned thread (4) with a predetermined number of windings such that as much food as possible, which is located between the tying points (1, 2), is displaced before the second tying point is formed, and this thread is guided from product (5.1-5.3) to product (5.1-5.3),
**characterised in that**
that the tying zone (3) is formed by at least one displacer (11, 12) and a thread feeder at the first tying point (1) of the tying zone (3) winds the thread (4) around the tying zone (3) several times to form the first tying point (1), thereafter, to produce a predetermined number of windings (4A), the product (5.1-5.3) is moved along its conveying direction and the second tying point (2) is produced,
whereby a movement of a rotor with the thread (4) and a movement of the displacers (11, 12) are synchronised so that a thread pitch between the two tying points (1, 2) can be generated before axial movement of the displacer (12) takes place, and
whereby a skin type is determined by means of a camera connected to an artificial intelligence system on the rotor housing in the area of a skin feed, and subsequently the movement of the thread feeder and/or displacers (11, 12) is determined.

2. A method according to claim 1, **characterised in that** the same thread (4) is used for the creation of the tying points (1, 2) and the wrapping of the tying area (3).

3. A method according to claim 1 or 2, **characterised in that** the speed remains constant both during the formation of the tying points (1, 2) and during the wrapping of the tying area (3).

4. A method according to any one of claims 1 to 3, **characterised in that** the wrapping speed of the thread feeder during the formation of the tying points (1, 2) is different from that during the formation of the windings (4A) around the tying area (3).

5. A method according to at least one of the preceding claims, **characterised in that** the skin (8) consists of plastic.

6. A method according to at least one of the preceding claims, **characterised in that** a transparent skin (8) is used.

7. A method according to at least one of the preceding claims, **characterised in that** a liquid foodstuff, in particular a soup, is selected as the foodstuff to be filled into the skin (8).

8. A method according to at least one of the preceding claims, **characterised in that**, in the direction of conveyance upstream of the first sealing point (1), a displacer (11) constricts the sealing area (3).

9. A method according to claim 8, **characterised in that**, after the first sealing point (1), the product (5.1-5.3) is pulled further in the conveying direction by a further displacer (12) to create the sealing area (3).

10. A method according to claim 9, **characterised in that**, as the product (5.1-5.3) is pulled further, the binding zone (3) is wrapped between the further displacer (12) and the first displacer (11)

11. A method according to claim 10, **characterised in that** the second sealing point (2) is formed upstream of the first displacer (11).

12. A method according to at least one of claims 9 to 11, **characterised in that** the movement of the further displacer (12) and the movement of the thread feeder are synchronised.

13. Device for manufacturing a product (5.1-5.3) comprising a foodstuff enclosed in a casing (10) on a strand, wherein successive products (5.1-5.3) are separated from one another by a tying zone (3) and a rotor for a thread (4) for wrapping the tying zone (3) and a movable displacer (12), **characterised in that** the movement of the displacer (12) is synchronised with the movement of the rotor with the thread (4) by means of a servo drive, such that a thread pitch between two tying points (1, 2) can be generated before the axial movement of the displacer (12) takes place, wherein, for determining a skin type, a camera is provided on the rotor housing in the region of a skin feed, which is connected to an artificial intelligence system and determines the movement of the thread feeder and/or the displacers (11, 12).

14. Device according to claim 13, **characterised in that** the servo drive is an electric motor or a linear drive.

## Revendications

1. Procédé de fabrication d'un produit (5.1-5.3), contenant un aliment dans une peau (10), en forme de chapelet, dans lequel
des produits successifs (5.1-5.3) sont séparés les uns des autres par une zone de ficelage (3) créée entre deux points de ficelage (1, 2),
la zone de ficelage (3) est enroulée plusieurs fois sur sa longueur (S) par un fil tendu (4) ayant un nombre prédéterminé d'enroulements, de manière à refouler autant que possible les aliments qui se trouvent entre les points de ficelage (1, 2), avant que le deuxième point de ficelage ne soit créé et que ce fil ne passe d'un produit (5.1-5.3) à l'autre (5.1-5.3),
**caractérisé en ce que**
la zone de ficelage (3) est créée par au moins un dispositif de refoulement (11, 12), et, pour créer le premier point de ficelage (1), un fournisseur de fil au niveau du premier point de ficelage (1) de la zone de ficelage (3) enroule plusieurs fois le fil (4) autour de la zone de ficelage (3), puis, pour créer un nombre prédéfini d'enroulements (4A), le produit (5.1-5.3) est déplacé le long de sa direction de transport, et le deuxième point de ficelage (2) est créé,
le mouvement d'un rotor muni du fil (4) et le mouvement des dispositifs de refoulement (11, 12) sont synchronisés de manière à pouvoir créer un pas de fil entre les deux points de ficelage (1, 2), avant qu'un mouvement axial du dispositif de refoulement (12) n'ait lieu, et
un type de peau est déterminé au moyen d'une caméra qui est en communication avec une intelligence artificielle et qui se trouve sur le boîtier du rotor au niveau d'une d'alimentation en peau, puis le mouvement du fournisseur de fil et/ou des dispositifs de refoulement (11, 12) est déterminé.

2. Procédé selon la revendication 1,
**caractérisé en ce que** le même fil (4) est utilisé pour créer les points de ficelage (1, 2) et pour enrouler la zone de ficelage (3).

3. Procédé selon la revendication 1 ou 2,
**caractérisé en ce que** la vitesse est constante tant lors de la création des points de ficelage (1, 2) que lors de l'enroulement de la zone de ficelage (3).

4. Procédé selon l'une des revendications 1 à 3,
**caractérisé en ce que** la vitesse d'enroulement du fournisseur de fil lors de la création des points de ficelage (1, 2) est différente de celle utilisée lors de la création des enroulements (4A) autour de la zone de ficelage (3).

5. Procédé selon l'une au moins des revendications précédentes,
**caractérisé en ce que** la peau (8) est en matière plastique.

6. Procédé selon l'une au moins des revendications précédentes,
**caractérisé en ce qu'**une peau transparente (8) est utilisée.

7. Procédé selon l'une au moins des revendications précédentes,
**caractérisé en ce qu'**un aliment liquide, en particulier une soupe, est choisi comme aliment à introduire dans la peau (8).

8. Procédé selon l'une au moins des revendications précédentes,
**caractérisé en ce qu'**un dispositif de refoulement (11) rétrécit la zone de ficelage (3) en amont du premier point de ficelage (1) dans la direction de transport.

9. Procédé selon la revendication 8,
**caractérisé en ce qu'**en aval du premier point de ficelage (1), le produit (5.1-5.3) est tiré dans la direction de transport par un autre dispositif de refoulement (12), afin de créer la zone de ficelage (3).

10. Procédé selon la revendication 9,
**caractérisé en ce que**, lors de la traction du produit (5.1-5.3) entre l'autre dispositif de refoulement (12) et le premier dispositif de refoulement (11), la zone de ficelage (3) est enroulée.

11. Procédé selon la revendication 10,
**caractérisé en ce que** le deuxième point de ficelage (2) est créé en amont du premier dispositif de refoulement (11).

12. Procédé selon l'une au moins des revendications 9 à 11,
**caractérisé en ce que** le mouvement de l'autre dispositif de refoulement (12) et le mouvement du fournisseur de fil sont synchronisés.

13. Dispositif pour fabriquer des produits (5.1-5.3), contenant des aliments dans une peau, en forme de chapelet, dans lequel les produits successifs (5.1-5.3) sont séparés les uns des autres par une zone de ficelage (3) à laquelle sont associés un rotor pour un fil (4), destiné à enrouler la zone de ficelage (3), et un dispositif de refoulement mobile (12),
**caractérisé en ce que** le mouvement du dispositif de refoulement (12) est synchronisé avec le mouvement du rotor muni du fil (4) au moyen d'un servomoteur, de sorte qu'un pas de fil entre deux points de ficelage (1, 2) peut être créé avant que le mouvement axial du dispositif de refoulement (12) n'ait lieu,
une caméra est prévue sur le boîtier du rotor au niveau d'une alimentation en peau afin de déterminer un type de peau, caméra qui est en communication avec une intelligence artificielle et qui détermine le mouvement du fournisseur de fil et/ou des dispositifs de refoulement (11, 12).

14. Dispositif selon la revendication 13,
**caractérisé en ce que** le servomoteur est un moteur électrique ou un entraînement linéaire.
